# EUROPÄISCHE PATENTSCHRIFT

(11) **EP 3 417 978 B1**
(45) Veröffentlichungstag und Bekanntmachung des Hinweises auf die Patenterteilung: **01.07.2020**
(21) Anmeldenummer: 18174110.9
(22) Anmeldetag: 24.05.2018
(51) Int. Cl.: B23K 9/133, B65H 51/20

(54) **AUSGLEICHSVORRICHTUNG FÜR EINEN SCHWEISSDRAHT**
COMPENSATION DEVICE FOR A WELDING WIRE
DISPOSITIF COMPENSATEUR POUR UN FIL DE SOUDAGE

(30) Priorität: 26.05.2017 DE 102017111535
(43) Veröffentlichungstag der Anmeldung: 26.12.2018
(73) Patentinhaber: Carl Cloos Schweißtechnik Gesellschaft mit beschränkter Haftung, 35708 Haiger (DE)
(72) Erfinder: Weber, Simon, 35685 Manderbach (DE); Schäfer, Wolfgang, 35716 Dietzhölztal (DE); Weinmann, Torsten, 35713 Eschenburg-Eibelshausen (DE); Friedrich, Frank, 35630 Ehringshausen (DE); Schmidt, Klaus-Peter, 57584 Scheuerfeld (DE)
(74) Vertreter: Lippert Stachow Patentanwälte Rechtsanwälte

(56) Entgegenhaltungen:
- WO-A1-01/38034
- WO-A1-2005/002775
- WO-A1-2005/070607

## Beschreibung

Die Erfindung betrifft eine Schweißdrahtausgleichsvorrichtung, umfassend ein Gehäuse mit einem Einlauf- und einem Auslaufabschnitt sowie einem Freiraum für den Schweißdraht, eine erste, im Einlaufabschnitt des Gehäuses angeordnete Kupplungseinrichtung zur Befestigung eines Drahtführungsschlauchs für den einlaufenden Schweißdraht; eine zweite, im Auslaufabschnitt des Gehäuses angeordnete Kupplungseinrichtung zur Befestigung eines Drahtführungsschlauchs für den auslaufenden Schweißdraht sowie einen Sensor zur Erfassung einer Auslenkung des in der Vorrichtung gepufferten, im Gehäuse zumindest abschnittsweise bogenförmig verlaufenden Schweißdrahtes.

Die Offenlegungsschrift WO013804 A1 betrifft ein Verfahren zum Fördern von Schweißdraht von einem Drahtvorrat zu einem Schweißbrenner bzw. eine Vorrichtung zur Ausführung eines solchen Verfahrens. Innerhalb der Drahtförderstrecke ist ein Rohrsensor angeordnet, umfassend ein durch ein rohrförmiges Element gebildetes Gehäuse, eine Drahteinlaufführung sowie eine Drahtauslaufführung und einen Detektor zur Erfassung der Auslenkung des Schweißdrahtes aus einer Mittellage im rohrförmigen Element. Mittels des Detektors wird die in der Drahtzuführung zwischen mehreren Drahtfördervorrichtungen auftretende Förderkraft bzw. Druckkraft im Schweißdraht erfasst, wobei in Abhängigkeit von einem Ausmaß einer Querbewegung des Schweißdrahtes im Rohrsensor die Förderkraft und/oder -geschwindigkeit zumindest eine der Schweißdrahtfördervorrichtungen verändert wird.

Eine gattungsbildende Schweißdrahtausgleichsvorrichtung ist auf dem Gebiet bekannt und beispielsweise in der Offenlegungsschrift WO 2005070607 A1 beschrieben. Die Nutzung einer derartigen Schweißdrahtausgleichsvorrichtung ist insbesondere bei solchen Schweißverfahren zweckmäßig, bei welchen der als verbrauchende Elektrode eingesetzte Schweißdraht nicht in allen Betriebssituationen mit konstanter Geschwindigkeit in Richtung zum Schweißbad bzw. zum zu schweißendem Werkstück transportiert wird, sondern beispielsweise zu Beginn des Schweißprozesses oder während des eigentlichen Schweißprozesses in eine Abfolge von Vorwärts- und Rückwärtsbewegungen versetzt oder mit veränderlicher Geschwindigkeit gefördert wird. Hierzu kommen Drahtfördersysteme bzw. Drahtantriebe wie Drahtschub- und/oder Drahtziehantriebe zum Einsatz, wobei die Drahtförderung über die gesamte Schweißdrahtförderstrecke zwischen einer Drahtvorratseinrichtung und dem Schweißbad mit hoher Genauigkeit und quasi verzögerungsfrei gesteuert werden muss, um einen Schweißprozess zu ermöglichen, der ohne weiteres bei der beispielhaften Durchführung eines Kurzlichtbogenprozesses mit Tropfenübergabe bei Kurzschlussauflösung ein mehrere zehnmaliges Vor- und Zurückziehen des Drahtes pro Sekunde erfordert. Die Drahtausgleichs-vorrichtung, welche innerhalb einer solchen Schweißdrahtförderstrecke angeordnet sein kann, dient bei wechselnden Fördergeschwindigkeiten oder beim Wechsel der Förderrichtung des Schweißdrahtes zum zeitweise Speichern eines Überschusses an Schweißdrahtlänge, sodass ein momentaner Überschuss nicht über die gesamte Drahtförderstrecke zurück in die Drahtvorratseinrichtung transportiert werden muss bzw. bei kurzfristigem Bedarf an einer höheren Schweißdrahtgeschwindigkeit über eine begrenzte Zeitdauer ein Schweißdrahtüberschuss aus der Schweißdrahtausgleichsvorrichtung entnommen werden kann.

Die gattungsbildende Schweißdrahtausgleichsvorrichtung ist so ausgebildet, dass der Draht zwischen Einlaufabschnitt und Auslaufabschnitt des Gehäuses innerhalb einer Drahtseele geführt ist und die Bewegung der Drahtseele über ein Messmittel, beispielsweise einen als Winkelsensor ausgebildeten Inkrementalgeber erfasst wird, der über einen Hebel und eine drehbar gelagerte Klemme mit der Drahtseele verbunden ist.

Der Erfindung liegt die Aufgabe zugrunde, die gattungsbildende Schweißdrahtausgleichsvorrichtung so weiterzubilden, dass deren Funktionalität verbessert bzw. erweitert wird.

Diese Aufgabe wird durch eine erfindungsgemäße Schweißdrahtausgleichsvorrichtung gemäß Anspruch 1 gelöst. Diese zeichnet sich dadurch aus, dass der Schweißdraht über seine überwiegende, insbesondere seine gesamte Erstreckung im Freiraum des Gehäuses nicht ummantelt, d.h. nicht von einer Drahtseele umgeben und somit freiliegend verläuft und der Sensor ferner ausgebildet ist, das Vorhandensein sowie das Fehlen des Schweißdrahtes im Freiraum des Gehäuses zu erfassen, wobei der Freiraum für den nicht ummantelten Schweißdraht eine Zwangsführung bereitstellt zum Durchfädeln des Schweißdrahtes aus der ersten Kupplungseinrichtung heraus in der zweite Kupplungseinrichtung.

Durch diese gestalterische Maßnahmen wird erreicht, dass zum einen eine Wechselwirkung zwischen Draht und Drahtseele innerhalb des Freiraums vermieden werden kann und damit keine Reibungsverluste auftreten, sodass die erfindungsgemäße Schweißdrahtausgleichsvorrichtung ein quasi trägheitsfreies Antwortverhalten zeigt, da auftretende Zug- bzw. Druckspannungen auf den Draht innerhalb der Schweißdrahtausgleichsvorrichtung ohne Verluste zur Auslenkung des Drahtes und damit zur Ablage oder Abführung des Überschusses von Schweißdraht innerhalb des Freiraums umgesetzt werden können, ohne dass Energie zur Verformung der Drahtseele und darüber hinaus Reibungsverluste zwischen Draht und Drahtseele zusätzlich aufgebracht werden müssen. Dadurch, dass erfindungsgemäß der Schweißdraht im Freiraum des Gehäuses frei liegend angeordnet ist, kann ferner mit der Ausbildung des Sensors derart, dass das Vorhandensein des Schweißdrahtes im Freiraum des Gehäuses erfassbar ist, die Funktionalität der Ausgleichsvorrichtung erhöht werden. Damit kann die Flexibilität bei der Steuerung der Schweißdrahtförderstrecke erhöht werden, da mit der erfindungsgemäßen Puffervorrichtung das Fehlen des Schweißdrahtes im Freiraum bzw. insbesondere das Eintreten des Schweißdrahtes, beispielsweise an einer vorgegebenen Stelle innerhalb des Freiraumes der Puffervorrichtung, erfassbar bzw. erkennbar ist, wobei die bereitgestellte Zwangsführung im Freiraum ermöglicht, dass der Schweißdraht durch einfaches Vorschieben, insbesondere durch Ansteuern eines Drahtantriebes ohne manuelles Zutun, vom Einlaufabschnitt respektive die erste Kupplungseinrichtung in den Auslaufabschnitt respektive die zweite Kupplungseinrichtung bewegbar ist. Freiraum meint dabei ein Volumen innerhalb der Vorrichtung bzw. zwischen den beiden Kupplungseinrichtungen, innerhalb dessen der Schweißdraht frei beweglich angeordnet sein kann.

Insofern ist die Angabe "Zwangsführung" breit zu verstehen, d.h. der Draht kann sich in dem Volumen des Freiraums frei bewegen, wobei dieses Volumen ein Vielfaches des Volumens des sich durch den Freiraum hindurch erstreckenden Drahtes darstellt. "Zwangsführung" meint dabei die Bereitstellung von Begrenzungsflächen des Freiraums, derart, dass der Draht beim Vorschieben vom Einlaufabschnitt respektive der ersten Kupplungseinrichtung in den Auslaufabschnitt respektive die zweite Kupplungseinrichtung geführt ist. Die den Freiraum festlegenden Grenzflächen sind so gestaltet, dass ein herkömmlicher, vergleichsweiser formstabiler, nicht ummantelter Schweißdraht beim Ein- und Vorschieben des Schweißdrahtes aus der ersten Kupplungseinrichtung heraus durch die Gestaltung und Ausrichtung der Grenzflächen des Freiraumes an diesen entlanggleitet und automatisch in die zweite Kupplungseinrichtung hinein geführt wird zum Heraustreten aus der Schweißdrahtausgleichsvorrichtung.

Weitere erfindungsgemäße Ausführungsformen und erfindungsgemäße Merkmale sind in der allgemeinen Beschreibung, den Figuren, der Figurenbeschreibung sowie den Unteransprüchen angegeben.

Zweckmäßigerweise kann der Freiraum zur Festlegung einer maximalen Auslenkung des Schweißdrahtes in einem vorgegebenen Bereich des Freiraums zumindest eine Begrenzung wie eine Begrenzungslinie bzw. eine Begrenzungsfläche aufweisen, die in Längsrichtung des Drahtes eine Sprungstelle wie eine Unstetigkeit umfasst. Vorzugsweise kann dabei vorgesehen sein, dass der besagte Bereich unmittelbar vor oder innerhalb eines Erfassungsbereichs des Sensors angeordnet ist, wobei dieser Erfassungsbereich durch die Eigenschaften des Sensors festgelegt sein kann. Die angegebene Gestaltung des Freiraumes ermöglicht insbesondere die Verwendung eines kostengünstigen, u.U. auch nicht kalibrierten Ultraschallsensors als Drahtsensor zur Erfassung der Auslenkung des Schweißdrahtes in der Ausgleichsvorrichtung. Andererseits können zur Umsetzung der Erfindung auch andere Sensoren verwendet werden, insbesondere optische Sensoren.

Je nach Ausführungsform kann ein solcher Sensor beispielsweise einen kegel- oder keulenförmigen Erfassungsbereich aufweisen, innerhalb dessen die jeweilige Auslenkung des Schweißdrahtes erfasst bzw. gemessen werden kann. Eine solche Sprung- bzw. Unstetigkeitsstelle einer Begrenzung kann beispielsweise durch zwei etwa senkrecht zueinander verlaufende Flächenabschnitte innerhalb der Begrenzung des Freiraums ausgebildet sein. Insbesondere bei bogenförmigen Abschnitten des Drahtes innerhalb des Freiraums kann diese Auslenkrichtung im Erfassungsbereich des Sensors radial zum Bogenabschnitt erfolgen. Dabei kann auch die Begrenzungslinie bzw. -fläche zumindest abschnittsweise innerhalb des Gehäuses der erfindungsgemäßen Schweißdrahtausgleichsvorrichtung bogenförmig, d.h. gekrümmt sein. Zweckmäßigerweise kann die Achse eines Erfassungsbereichs so angepasst sein, dass sie innerhalb des Erfassungsbereichs im Wesentlichen mit der Auslenkrichtung zusammenfällt.

Um ein Abknicken des Schweißdrahtes innerhalb des Freiraums zu vermeiden, kann erfindungsgemäß vorgesehen sein, zumindest abschnittsweise, insbesondere innerhalb des gesamten Freiraums des Schweißdrahts die Zwangsführung so auszubilden, dass der sich durch die Vorrichtung hindurch erstreckende Schweißdraht innerhalb des Freiraums im Wesentlichen in einer Ebene verläuft. Es sei darauf hingewiesen, dass sich der Schweißdraht in dieser Ausführung beim Ein- bzw. Durchfädeln des Schweißdrahtes durch die Ausgleichsvorrichtung auch außerhalb dieser Bewegungsebene erstrecken kann, jedoch nach dem Durchfädeln innerhalb dieser Ebene liegt.

Zweckmäßigerweise kann vorgesehen sein, dass sich der Freiraum in Drahtbewegungsrichtung vor dem Erfassungsbereich des Sensors in Bezug auf eine Richtung sprunghaft vergrößert, wobei diese Richtung in der Bewegungsebene des Schweißdrahtes und parallel zur Richtung der Auslenkung liegt. Die beschriebenen Ausführungsformen zum Vorsehen einer sprunghaften Änderung des Freiraums in eine vorgegebene Richtung kann insbesondere vorteilhaft sein, um das Einfädeln und Durchschieben des Schweißdrahtes durch die Schweißdrahtausgleichsvorrichtung genau zu erfassen. Dabei kann zweckmäßigerweise die in Längsrichtung vorliegende Starrheit des Schweißdrahtes genutzt werden, um das Vorschieben des Schweißdrahtes über die beschriebene Sprungstelle, die in Auslenkrichtung unmittelbar vor dem Erfassungsbereich oder im Erfassungsbereich des Sensors angeordnet sein kann, zu detektieren und in Abhängigkeit dieser Detektion die Drahtförderung in bestimmten Betriebssituationen zu steuern.

Um insbesondere ein motorbetriebenes Einfädeln des Schweißdrahtes innerhalb der erfindungsgemäßen Schweißdrahtausgleichsvorrichtung zu erleichtern, kann sich der Freiraum zur Bereitgestellung einer Zwangsführung des Drahtes ausgehend von der ersten Kupplungseinrichtung und senkrecht zur Bewegungsebene des Schweißdrahtes in Richtung zum Erfassungsbereich des Sensors trichterartig verjüngen. Damit kann zum einen das Einfädeln bzw. Hindurchfädeln des Drahtes durch die Schweißdrahtausgleichsvorrichtung erleichtert und zum anderen sichergestellt werden, dass der Schweißdraht im bzw. kurz vor dem Erfassungsbereich senkrecht zur Bewegungsebene des Schweißdrahtes zwangsgeführt ist, um eine besonders störungsfreie Erfassung sicherzustellen und darüber hinaus sicherzustellen, dass der Draht auch beim Auftreten von hohen Druck- bzw. Zugkräften durch die Drahtförderung innerhalb einer vorgegebenen Bewegungsebene verbleibt, sodass die Gefahr einer Knickung des Drahtes vermieden werden kann.

Ein motorbetriebenes Ein- und Durchfädeln des Schweißdrahtes in der erfindungsgemäßen Schweißdrahtausgleichsvorrichtung kann auch dadurch erleichtert werden, dass die Durchführungsachsen der ersten und der zweiten Kupplungseinrichtung innerhalb der Bewegungsebene des Schweißdrahtes in des Ausgleichsvorrichtung einen Winkel zwischen etwa 70 bis 110 Grad, insbesondere einen Winkel von etwa 90 Grad bilden. Dabei kann die Gestaltung des Freiraum derart ausgebildet sein, dass der Schweißdraht im Freiraum im Bereich des Einlaufabschnittes und im Bereich des Auslaufabschnittes jeweils geradlinig und koaxial zur jeweiligen Durchführungsachse verläuft und beide Abschnitte durch einen einzigen bogenförmigen Verlaufsabschnitt des Drahtes zusammengeführt sind. Die Gestaltung der Begrenzungsflächen des Freiraums kann dabei eine Zwangsführung des Drahtes beim Ein- und Durchfädeln bereitstellen, sodass der Draht in die zweite Kupplungseinrichtung eintritt.

Um die Erfassung der Auslenkung des Schweißdrahtes innerhalb des jeweiligen Erfassungsbereichs des verwendeten Sensors störungsfrei von Begrenzungsflächen des Freiraums vorzunehmen, kann vorgesehen sein, dass nach der Verjüngung des Freiraums unmittelbar vor dem Erfassungsbereich senkrecht zur Bewegungsebene des Schweißdrahtes sich der Freiraum in diese Richtung sprunghaft vergrößert. Die Drahtbewegungsrichtung bezeichnet dabei die Förderrichtung des Drahtes in dessen Längsrichtung.

Es kann auch vorgesehen sein, dass im weiteren Verlauf des Freiraums in Drahtbewegungsrichtung eine trichterförmige Verengung als Zwangsführung des Schweißdrahtes vorgesehen ist, insbesondere zur Unterstützung der Einfädelung des Schweißdrahtes in die zweite Kupplungseinrichtung.

Vorzugsweise kann als Sensor für die erfindungsgemäße Schweißdrahtausgleichsvorrichtung ein berührungsloser Sensor vorgesehen sein, welcher für die Durchführung der Erfassung bzw. Messung der Auslenkung keinen körperlichen Kontakt zum Schweißdraht benötigt, sodass auch durch die Messung der Auslenkung kein Einfluss auf die Bewegung des Schweißdrahtes innerhalb des Freiraums erfolgt. Beispielsweise kann ein Ultraschallsensor oder ein Lichtsensor vorgesehen sein, die insbesondere als Abstandssensor ausgebildet sein können.

In einer bevorzugten Ausführungsform kann eine Achse des Erfassungsbereichs des Sensors, insbesondere eine Symmetrieachse des Erfassungsbereichs etwa senkrecht zur Drahtbewegungsrichtung und insofern etwa parallel zur Auslenkrichtung des Drahtes orientiert sein. Zur Bereitstellung einer kompakten Bauweise, insbesondere in etwa senkrechter Richtung zur Drahtbewegungsrichtung, kann zweckmäßigerweise vorgesehen sein, dass der Sensor in einem gemeinsamen Gehäuse sowohl einen Sender zur Aussendung von beispielsweise optischen oder akustischen Wellen und darüber hinaus einen Empfänger zum Empfang der vom Draht in Richtung zum Sensor zurückgeworfenen Wellen aufweist. Vorzugsweise kann dabei vorgesehen sein, dass aktive Flächen des Senders und Empfängers zwar zueinander beabstandet, jedoch innerhalb eines gemeinsamen Gehäuseabschnittes wie einer Stirnfläche des Sensors angeordnet sind. Dabei meint "aktive Fläche des Senders" dessen Emissionsfläche und "aktive Fläche des Empfängers" dessen Empfangsfläche für die zurückgeworfenen Sensorwellen. Insbesondere im Falle eines optischen oder akustischen Sensors wie eines Ultraschallsensors kann dieser ein langgestrecktes Gehäuse aufweisen, wobei dessen Längsachse die Achse des Erfassungsbereichs des Sensors festlegen kann.

Zur Bereitstellung einer kompakten Bauweise der erfindungsgemäßen Schweißdrahtausgleichsvorrichtung, insbesondere in senkrechter Richtung zur Drahtbewegungsrichtung kann vorgesehen sein, den Sensor, insbesondere in Fällen, in welchen dieser eine vorgegebene Längserstreckung aufweist, diesen in Bezug auf seine Längserstreckung im Wesentlichen in Drahtbewegungsrichtung auszurichten und anzuordnen, wobei ein Umlenkelement wie ein optischer Spiegel bzw. ein Ultraschallspiegel, nachfolgend allgemein als Spiegeleinrichtung bezeichnet, vorgesehen sein kann, um die vom Sensor ausgesendeten Wellen bzw. die vom Draht reflektierten Wellen umzulenken. Allgemein kann die erfindungsgemäße Schweißdrahtausgleichsvorrichtung eine Spiegeleinrichtung umfassen zur Umlenkung von, vom Sensor ausgesendeten Sensorwellen in Richtung zum Schweißdraht und zur Umlenkung von, vom Schweißdraht reflektierten oder gestreuten Sensorwellen in Richtung auf eine Sensor- bzw. Empfangsfläche des Sensors. In einer besonders zweckmäßigen Ausführungsform kann dabei vorgesehen sein, dass die Spiegeleinrichtung in Bezug auf eine Normalrichtung auf die Spiegelfläche einen Winkel von etwa 35 bis 55°, insbesondere etwa 45° zur Achse des Sensors bzw. des Erfassungsabschnittes aufweist.

Die Anordnung eines solchen berührungslosen Abstandssensors in der erfindungsgemäßen Schweißdrahtvorrichtung kann zweckmäßigerweise dergestalt ausgebildet sein, dass bei nicht durch die Vorrichtung hindurch gefädeltem Schweißdraht der Sensor den Abstand zu einem fixen Messpunkt oder einer Messfläche im Inneren des Gehäuses erfasst, der bei im Freiraum eingefädeltem Schweißdraht durch diesen verdeckt ist. Dieser Messpunkt bzw. Messfläche kann als Fixpunkt bzw. Fixfläche auf einer Begrenzungslinie bzw. Begrenzungsfläche für den Schweißdraht bzw. den Freiraum liegen. Dabei kann der Sensor so ausgebildet sein, dass er das Eintauchen der Schweißdrahtspitze in den Erfassungsbereich des Sensors beim Durchführen des Schweißdrahtes durch den Freiraum erfasst bzw. detektiert und diese Information zur Steuerung der Drahtförderung genutzt wird.

In einer besonderen Gestaltung kann vorgesehen sein, dass die angegebenen Begrenzungslinien bzw. -flächen des Freiraums gerade die Zwangsführung des Schweißdrahtes darstellen. Vorteilhafterweise kann dabei vorgesehen sein, dass die angegebene Zwangsführung des Schweißdrahtes im Wesentlichen durch Gehäuseinnenflächen bereitgestellt werden können.

Um beim Hindurchfädeln des Schweißdrahtes durch die erfindungsgemäße Schweißdrahtausgleichsvorrichtung sicherzustellen, dass der freiliegende Schweißdraht ausgehend vom Erfassungsbereich in Richtung zur zweiten Kupplungseinrichtung von dieser aufgenommen wird, kann zweckmäßigerweise vorgesehen sein, dass zur Zwangsführung des Schweißdrahtes sich der Freiraum ausgehend vom Erfassungsbereich des Sensors in Richtung zur zweiten Kupplungseinrichtung verjüngt, wobei vorzugsweise die Verjüngung sowohl in der Drahtbewegungsebene als auch senkrecht dazu erfolgen kann. "Verjüngung" meint dabei, dass sich die Abmessungen des Freiraums in die jeweiligen Richtungen, d.h. hier in der Drahtbewegungsebene als auch senkrecht dazu, verringert. In einer zweckmäßigen Ausführungsform kann zum gleichen Zweck vorgesehen sein, dass die zweite Kupplungseinrichtung eingangsseitig eine trichterförmige Aufnahme zur Aufnahme des Schweißdrahtes aufweist, wobei der Öffnungskegel der trichterförmigen Aufnahme mit einer trichterförmigen Verengung des Freiraums in Drahtbewegungsrichtung korrespondiert.

In einer besonders einfach gestalteten Ausführungsform kann das Gehäuse der erfindungsgemäßen Schweißdrahtausgleichsvorrichtung zwei plattenförmige Gehäusehälften aufweisen, die zueinander ausrichtbare Ausnehmungen zur Gestaltung eines Freiraums für den Schweißdraht zu dessen Zwangsführung zwischen den beiden Kupplungseinrichtungen aufweist. Die Angabe Zwangsführung meint hier die Führung des Schweißdrahtes innerhalb des durch Begrenzungseinrichtungen wie Begrenzungslinien bzw. -flächen gestalteten Freiraumes. Wie oben stehend schon erläutert, kann diese Zwangsführung des Schweißdrahtes innerhalb des Gehäuses zumindest abschnittsweise, vorzugsweise überwiegend durch die Gestaltung von Innenwandabschnitten des Gehäuses bereitgestellt werden.

Um vorzugsweise unmittelbar vor dem Erfassungsbereich in Bewegungsrichtung des Schweißdrahtes, wo der Freiraum in Richtung senkrecht zur Drahtbewegungsebene vermindert sein kann, einen übermäßigen Abrieb an der Gehäuseinnenwandung zu vermeiden kann vorgesehen sein, zumindest ein sich in Auslenkrichtung erstreckendes Anlageelement anzuordnen, das unmittelbar vor dem Erfassungsbereich des Sensors angeordnet ist zur Bereitstellung einer Anlagefläche für den Schweißdraht, wobei die Anlagefläche parallel zur Bewegungsebene angeordnet sein kann und so orientiert, dass die Flächennormale, etwa senkrecht zur Drahtbewegungsebene verläuft. Vorzugsweise können mehrere, insbesondere zwei derartige Anlageelemente in eine Richtung senkrecht zur Bewegungsebene des Schweißdrahtes beabstandet zueinander angeordnet sein, derart, dass zwischen diesen der Schweißdraht aufgenommen und zwangsgeführt ist. Insbesondere kann vorgesehen sein, jeweils eine der beiden Anlageelemente in einer Gehäusehalbschale anzuordnen, sodass der Schweißdraht im zusammengesetzten Zustand des Gehäuses zwischen Gehäusehalbschalen geführt ist. Vorzugsweise kann das jeweilige Anlageelement aus einem härteren Material wie das des Schweißdrahtes ausgebildet sein.

Das Ausgangssignal des Sensors der erfindungsgemäßen Schweißdrahtausgleichsvorrichtung kann mit einer zentralen Steuerung einer jeweiligen Schweißanlage verbunden sein, welche eine Schweißstromquelle zur Steuerung des Schweißprozesses einschließlich eines Schweißdrahtantriebes steuert. In einer anderen Ausführungsform kann auch vorgesehen sein, das Ausgangssignal des Sensors der erfindungsgemäßen Schweißdrahtausgleichsvorrichtung direkt als Eingangssignal an einen Drahtantrieb zur Steuerung der Schweißdrahtförderstrecke zu übermitteln. In einer weiteren Ausführungsform kann auch vorgesehen sein, das Ausgangssignal des Sensors der erfindungsgemäßen Schweißdrahtausgleichsvorrichtung als Eingangssignal an eine Steuereinrichtung für einen Drahtantrieb bzw. die Schweißstromquelle zu übermitteln, wobei diese Steuereinrichtung innerhalb bzw. auf einer Robotersteuerung angeordnet sein kann, welche die Bewegung eines den Schweißbrenner führenden Roboters steuert.

Wie der Fachmann erkennt, ist die erfindungsgemäße Schweißdrahtausgleichsvorrichtung in einer Vielzahl von Schweißanlagen bzw. -systemen mit abschmelzender Elektrode einsetzbar. Dies betrifft neben Anlagen mit einer einzelnen Drahtantriebseinheit jedoch auch Anlagen mit mehreren Schweißdrahtantrieben. Beispielsweise kann die Schweißanlage einen ersten Antrieb zum Fördern des Schweißdrahtes, insbesondere mit gleichförmiger Geschwindigkeit, über die Schweißdrahtförderstrecke zwischen einer Schweißdraht-Vorratseinrichtung und einer Stromdüse eines Schweißbrenners aufweisen und einen weiteren Schweißdrahtantrieb, mit welchem die beschriebenen Vorwärts- und Rückwärtsbewegungen des Schweißdrahtes im Bereich des Schweißbades erzeugt werden können, wobei zwischen diesen beiden Schweißdrahtantrieben eine erfindungsgemäß gestaltete Schweißdrahtausgleichsvorrichtung angeordnet sein kann, um einen momentanen Überschuss an Schweißdraht innerhalb der Schweißdrahtstrecke aufzunehmen bzw. einem momentanen höheren Bedarf an Schweißdraht bereitzustellen.

Die Erfindung umfasst ferner ein Verfahren zum Durchfädeln eines Schweißdrahtes in einer Schweißdrahtförderstrecke eines Schweißsystems wie einer Schweißanlage, bei welcher der Schweißdraht von einer Drahtvorratseinrichtung wie einer Drahtrolle mittels zumindest eines Drahtantriebes abgerollt und durch eine Schweißdrahtausgleichsvorrichtung hindurch bis zum Austritt an einer Stromdüse eines Schweißbrenners des Schweißsystems gefördert wird. Dabei kann die Schweißdrahtausgleichsvorrichtung eine erfindungsgemäße Draht-Puffereinrichtung sein, wobei das erfindungsgemäße Verfahren ein Verfahren darstellen kann zum Verwenden der obenstehend angegebenen erfindungsgemäßen Schweißdrahtausgleichsvorrichtung. Das erfindungsgemäße Verfahren zeichnet sich dadurch aus, dass Information betreffend die Teillänge der Drahtfördererstrecke zwischen der Schweißdrahtausgleichsvorrichtung und einer Austrittsdüse an einem Schweißbrenner des Schweißsystems gespeichert wird, der Schweißdraht, ausgehend von der Drahtvorratsvorrichtung in die Ausgleichsvorrichtung hinein durch entsprechendes Ansteuern des Drahtantriebes gefördert bzw. bewegt wird, bis das Vorhandensein des Schweißdrahtes in der Ausgleichsvorrichtung mittels eines Sensors, insbesondere eines Sensors zur Erfassung der Auslenkung des Schweißdrahtes in der Ausgleichsvorrichtung erkannt wird, der Schweißdraht dann durch entsprechendes Ansteuern des Drahtantriebes weiterbewegt wird über eine Wegstrecke, die der abgespeicherten Information zur Länge der Drahtförderstrecke zwischen der Ausgleichsvorrichtung und der Austrittsdüse des Schweißbrenners entspricht zum Fördern des Schweißdrahtes aus der Ausgleichsvorrichtung heraus bis zum Austritt an der Düse des Schweißbrenners. Das erfindungsgemäße Verfahren ermöglicht damit im Unterschied zu herkömmlichen Verfahren die automatisierte Förderung des Schweißdrahtes von der Ausgleichsvorrichtung bis zum Austritt an der Stromdüse des Schweißbrenners, sodass eine Wartungstätigkeit eines Nutzers hier entfallen kann. Da in der Regel der Schweißdraht zwischen der Drahtvorratsvorrichtung bis zur insbesondere erfindungsgemäß gestalteten Schweißdrahtausgleichsvorrichtung und von dieser bis zum Austritt an der Austrittsdüse wie der Stromdüse des Schweißbrenners in einer Drahtseele bzw. einem Drahtführungsschlauch verläuft, kann mit dem erfindungsgemäßen Verfahren letztlich vollautomatisiert der Draht bis zum Einsatzort gefördert werden. Erfindungsgemäß kommt es dabei nicht auf die Drahtförderteilstrecke zwischen der Drahtvorratsvorrichtung bis zur Schweißdraht- Puffervorrichtung an und ist insofern im Betrieb beliebig veränderbar, da der Eintritt bzw. das Durchfädeln des Schweißdrahtes in die Schweißdrahtausgleichsvorrichtung erfasst werden kann und nachfolgend der Antrieb zur weiteren Förderung um eine vorgegebene Strecke angesteuert werden kann, die einem vorgegebenen Abstand zwischen Schweißdrahtausgleichsvorrichtung und dem Austritt des Schweißdrahtes an der Austrittsdüse bzw. Stromdüse des Schweißbrenners entspricht.

Um ein gutes Ansprechverhalten bei der Steuerung der Drahtförderung zu erzielen, kann vorgesehen sein, die Schweißdrahtausgleichsvorrichtung in kurzer Beabstandung, beispielsweise einige 10 cm, vorzugsweise nicht mehr als ein bis zwei Meter beanstandet zum Brenner bzw. der Austrittsdüse am Brenner innerhalb der Drahtförderstrecke anzuordnen.

Die der Länge der Drahtförderstrecke zwischen der Schweißdrahtausgleichsvorrichtung und der Austrittsdüse des Schweißbrenners zugeordneten und abgespeicherten Information kann beispielsweise die direkte Länge, eine Fördergeschwindigkeit bei vorgegebener Förderzeitdauer oder auch eine Zeitdauer bei vorgegebener Fördergeschwindigkeit entsprechen. Diese Information kann in einer Steuereinrichtung gespeichert sein, welche den zumindest einen Drahtantrieb zum Fördern des Schweißdrahtes ansteuert, insbesondere in einer zentralen Steuereinrichtung des Schweißsystems oder bei einer anderen Ausführungsform in einer Steuereinrichtung, die in dem Drahtantrieb angeordnet sein kann.

Um die Förderung des Schweißdrahtes mit hoher Genauigkeit bis zum Austritt aus der Düse des Brenners durchzuführen, kann die Fördergeschwindigkeit des Schweißdrahtes über die gesamte Schweißdrahtförderstrecke unterschiedlich eingestellt werden. Zweckmäßigerweise kann dabei vorgesehen sein, nach dem Erfassen des Schweißdrahtes bzw. seines Drahtendes in der Schweißdrahtausgleichsvorrichtung die Fördergeschwindigkeit abzusenken und nachfolgend mit verminderter Geschwindigkeit den Draht bis zum Austritt an der Stromdüse zu fördern.

Die Erfindung wird im Folgenden durch das Beschreiben einiger Ausführungsformen unter Bezugnahme auf die beiliegenden Zeichnungen erläutert, wobei
- Figur 1a: eine Prinzipskizze eines ersten Schweißsystems,
- Figur 1b: eine Prinzipskizze eines zweiten Schweißsystems,
- Figur 2: eine Aufsicht einer erfindungsgemäß gestalteten Schweißdrahtausgleichsvorrichtung bei entferntem Deckelgehäuseelement,
- Figur 3a: Bauteile der in Figur 2 gezeigte Schweißdrahtausgleichsvorrichtung in einer Seitenansicht,
- Figur 3b: die Figur 3a gezeigten Bauteile in einer Schnittansicht,
- Figur 4a: eine Schrägansicht der Schweißdrahtausgleichsvorrichtung gemäß den Figuren 2, 3 in einer Offenstellung der beiden Gehäuseelemente,
- Figur 4b: eine Schrägansicht der Schweißdrahtausgleichsvorrichtung gemäß den Figuren 2, 3 in einer Geschlossenstellung der beiden Gehäuseelemente,
- Figur 5: eine Aufsicht einer weiteren Ausführungsform einer erfindungsgemäß gestalteten Schweißdrahtausgleichsvorrichtung bei entferntem Deckelgehäuseelement, und
- Figur 6: den Verlauf der Drahtfördergeschwindigkeit beim Durchfädeln eines Schweißdrahtes über die Schweißdrahtförderstrecke des Schweißsystems gemäß Figur 1
zeigt.

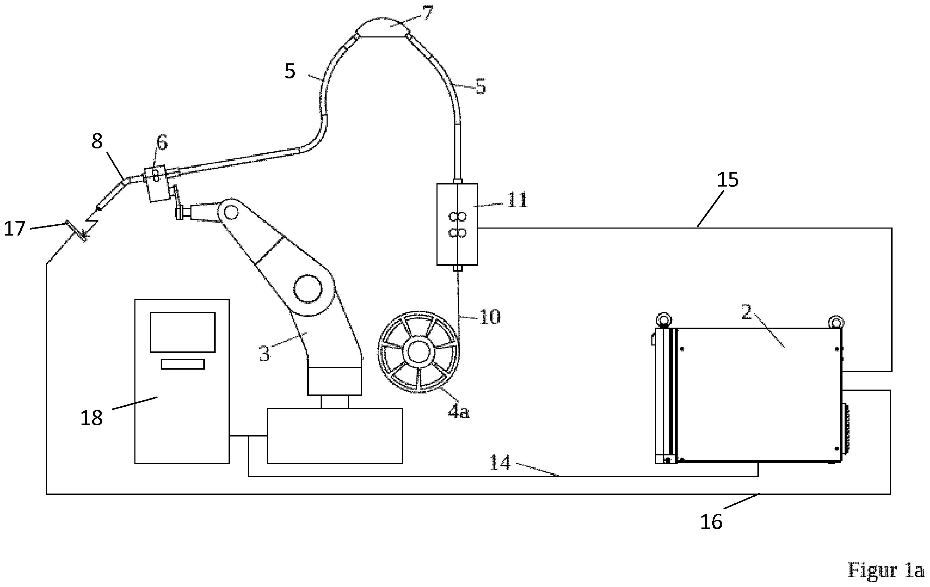

Die erfindungsgemäße Schweißdrahtausgleichsvorrichtung kann insbesondere bei Hand- oder Roboterschweißanlagen eingesetzt werden. Ein schematischer Aufbau einer Roboterschweißanlage 1 zur Durchführung eines Lichtbogen-Schweißprozesses mit abschmelzender Elektrode ist in Figur 1a dargestellt. Sie umfasst ein Schweißgerät 2, das eine Schweißstromquelle aufweist.

Die in der beschriebenen Ausführungsform verwendete abschmelzende Elektrode wird als Schweißdraht dem Schweißprozess zugeführt. Hierzu ist ein Träger zur Aufnahme einer Drahtrolle 4a vorgesehen, der am Roboter befestigt sein kann, wobei der Schweißdraht 10 in einem Drahtführungsschlauch 5 geführt und über die Drahtführungsstrecke mittels eines Drahthauptantriebs 6 und eines Drahthilfsantriebes 11 zum Schweißbrenner 8 transportiert wird. Zwischen dem Drahthilfsantrieb 11 und dem Drahthauptantrieb 6 ist eine erfindungsgemäß gestaltete Drahtausgleichsvorrichtung 7 angeordnet, in welchem insbesondere ein zeitweise auftretender Überschuss von Schweißdraht zwischengespeichert werden kann bzw. auf den Draht einwirkende Betriebsdruck- und Betriebszugspannungen kompensiert werden können. Zumindest abschnittsweise über die Drahtförderstrecke kann der Schweißdraht in einer Drahtseele geführt sein, welche selbst innerhalb des Drahtführungsschlauches geführt sein kann.

Die Schweißstromquelle 2 ist mittels eines Verbindungsschlauchpakets 15 mit dem Hilfsantrieb 11 verbunden. Das Verbindungsschlauchpaket 15 weist u.a. ein Schweißkabel auf, das den Schweißstrom zum Schweißbrenner 8 führt. Der Schweißkreis ist elektrisch über die Werkstückleitung 16 geschlossen, die mit dem zu schweißenden Werkstück 17 und der Schweißstromquelle 2 verbunden ist.

In einer nicht dargestellten Ausführungsform kann das Schweißgerät beispielsweise ferner ein Kühlaggregat zum Kühlen eines Kühlmediums sowie ein Gasspeicher zum Bereitstellen eines aktiven oder passiven Schweißgases, z.B. ein Schutzgas, aufweisen. Auch diese Betriebsmittel werden dann zu dem vom Roboter 3 getragenen Brenner 8 geführt. In dieser Ausführungsform kann der Drahtführungsschlauch sowie andere Führungsmittel, insbesondere jeweilige Schläuche, zum Führen von Schweißgas bzw. eines Kühlmittels in einem Schlauchpaket zusammengefasst sein. In einer weiteren Ausführungsform kann vorgesehen sein, kein Kühlaggregat einzusetzen, da der Brenner beispielsweise als gasgekühlter Schweißbrenner ausgebildet ist, wobei z.B. das zugeführte Schutzgas zur Kühlung des Brenners eingesetzt werden kann.

Die in Figur 1a in einer Prinzipdarstellung angegebene Roboterschweißanlage ist zur Ausführung eines Kurzlichtbogen-Schweißprozesses ausgebildet, bei welchem der Schweißdraht zunächst in eine Vorwärtsbewegung in Richtung zum Schweißbad versetzt wird zur Abgabe eines Tropfens angeschmolzener Elektrode in das Schweißbad, wenn der Schweißdraht in das Schweißbad eintaucht, nachfolgend der Schweißdraht wieder zurückgezogen wird zur Ausbildung eines Lichtbogens zum Anschmelzen der Elektrode und daraufhin wieder in Richtung zum Schweißbad transportiert wird, um einen weiteren Tropfen angeschmolzenen Materials in das Schweißbad zu übergeben, usw..

Die beschriebene Drahtbewegung wird in der Ausführungsform der Figur 1a durch die Antriebe 6, 11 durchgeführt, wobei der Hauptantrieb 6 zweckmäßigerweise in direkter Nachbarschaft zum Brenner angeordnet ist. In einer Ausführungsform der Steuerung des Antriebs kann beispielsweise die Drahthilfsantriebseinheit 11 zur kontinuierlichen und gleichförmigen Förderung des Schweißdrahtes in Richtung Brenner ausgebildet sein, während die zweite Drahtantriebseinheit 6 den Schweißdraht zur Durchführung des beschriebenen Kurzlichtbogen-Schweißverfahrens in die jeweilige Vorwärts- bzw. Rückwärtsbewegung versetzt. Der dann zeitweise auftretende Drahtüberschuss in der Drahtförderstrecke zwischen dem Drahtspeicher, wie die angegebene Drahtrolle 4a, und Schweißbrenner wird dabei in der Ausgleichsvorrichtung 7 gespeichert.

In der beschriebenen Ausführungsform wird die Steuerung des Schweißprozesses von der Schweißgerätesteuerung durchgeführt, die im Schweißgerät 2 angeordnet sein kann. Die Steuerung des Roboters 3 ist in der beschriebenen Ausführungsform im Schaltschrank 18 des Roboters angeordnet, wobei hier die Schweißgerätesteuerung und die Robotersteuerung über einen Steuerbus 14 kommunizieren, der zur Koordination des Roboters 3, des Schweißgerätes 2 und der Drahtantriebe 8, 11, 12 verwendet wird. Da der beschriebene Schweißprozess sowie die Steuerung der einzelnen Komponenten der Roboterschweißanlage gemäß Figur 1a dem Fachmann wohlbekannt sind, muss darauf nicht detaillierter eingegangen werden.

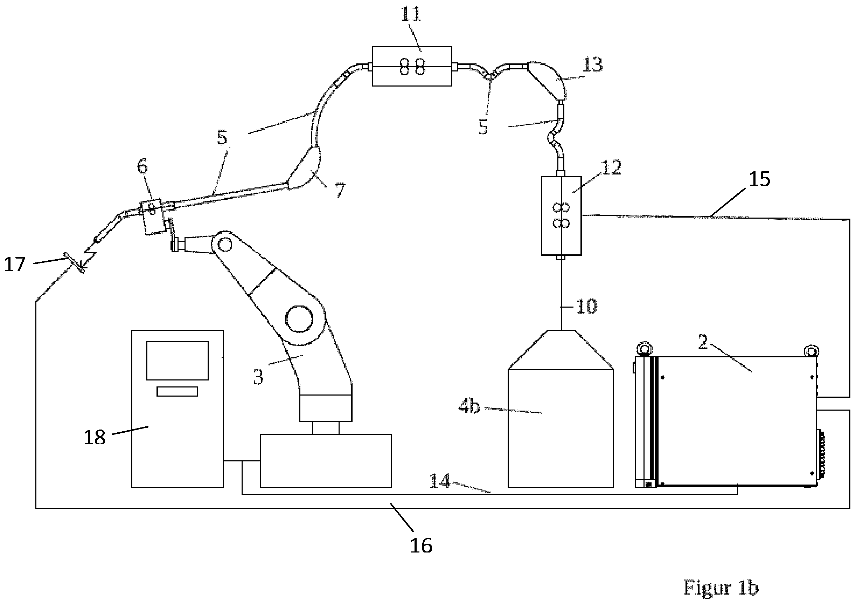

Der in Figur 1b angegebene schematische Aufbau einer Roboterschweißanlage 1 zur Durchführung eines Lichtbogen-Schweißprozesses mit abschmelzender Elektrode unterscheidet sich von der Anlage gemäß Figur 1a dadurch, dass zum einen der Draht 10 nicht von einer Drahtrolle 4a, sondern aus einem Drahtfass 4a entnommen und die Anlage mehrere Drahthilfsantriebe sowie Ausgleichsvorrichtungen 7, 13 aufweist. Gemäß Figur 1b ist ein weiterer Hilfsantrieb 12 vorgesehen, wobei jeweils zwischen den Drahtantrieben 11, 12 und zwischen den Drahtantrieben 6, 11 eine Ausgleichsvorrichtung 13 bzw. 7 angeordnet ist. Die beschriebenen Maßnahmen ermöglichen eine verbesserte Steuerung der Drahtbewegung innerhalb der Drahtförderstrecke im Vergleich zur Anlage gemäß Fig. 1a.

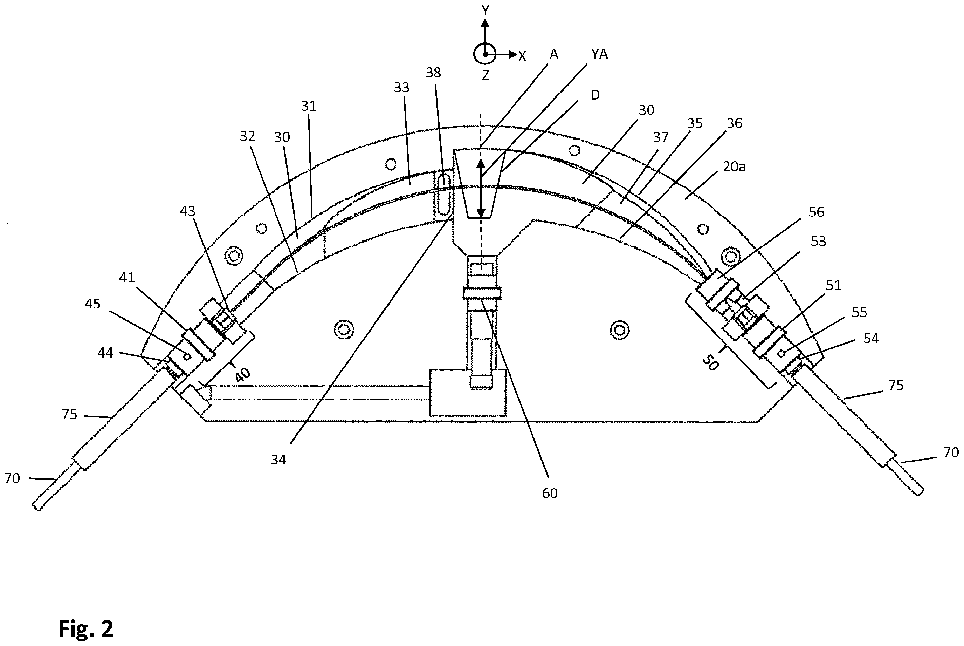

Figur 2 zeigt die erfindungsgemäße Ausgleichsvorrichtung in einer Ausführungsform, bei welcher das Gehäuse im Wesentlichen gleich gestaltete, plattenförmige Gehäusehälften aufweist als frontale Ansicht auf eine dieser Gehäuseelemente 20a, wobei erste und zweite Kupplungseinrichtungen sowie der Sensor 60 in das dargestellte Gehäuseelement eingelegt sind. In der Figur 2 auf der linken Seite weist das Gehäuseelement einen Einlaufabschnitt auf, in welchem eine erste, hier mehrteilige Kupplungseinrichtung vorgesehen ist zur Einführung des auch dargestellten Schweißdrahtes 10 in die Ausgleichsvorrichtung und zum Fixieren des Drahtführungsschlauches 75 und/oder der Drahtseele 70 des Schweißdrahtes 10. Zur Achse der ersten Kupplungseinrichtung etwa um 90° gekippt, ist in der Figur 2 auf der rechten Seite eine zweite Kupplungseinrichtung 50 in einem Auslaufabschnitt des Gehäuses angeordnet, über den der Schweißdraht die Ausgleichsvorrichtung in Richtung zum Schweißbrenner verlässt. In entsprechender Weise dient die Kupplungseinrichtung zum Führen des aus der Ausgleichsvorrichtung auslaufenden Drahtes und zum Fixieren des Drahtführungsschlauches 75 und/oder der Drahtseele 70. In der beschriebenen Ausführungsform ist die zweite Kupplungseinrichtung auch mehrteilig aufgebaut, worauf untenstehend näher eingegangen wird.

Zwischen den beiden Kupplungseinrichtungen 40, 50 ist in der beschriebenen Ausführungsform ein Freiraum 30 vorgesehen, innerhalb dessen der Schweißdraht nicht ummantelt, d.h. freiliegend angeordnet ist. Der Freiraum 30 wird in der beschriebenen Ausführungsform durch entsprechende Begrenzungsflächen gebildet, die je nach Ausführungsform in das Gehäuse eingearbeitet sein können. In einer anderen Ausführungsform kann auch vorgesehen sein, das Gehäuseelement 20a sowie ein zugehöriges, komplementäres Gehäuseelement zur Gestaltung eines geschlossenen Gehäuses mittels eines Spritzgießverfahrens herzustellen, sodass der jeweilige Freiraum integral mit dem jeweiligen Gehäuseteil gestaltet ist.

Erkennbar verläuft der im Freiraum 30 des Gehäuses der Ausgleichsvorrichtung 7 angeordnete Schweißdraht 10 bogenförmig zwischen den beiden Kupplungseinrichtungen, wobei etwa mittig ein Abstandssensor 60 angeordnet ist, der hier als Ultraschallsensor ausgebildet ist. Dieser kann je nach Ausführungsform beispielsweise einen keulenförmigen oder wie in Figur 2 angegeben, einen kegelförmigen Erfassungsbereich D aufweisen, der in der beschriebenen Ausführungsform rotationssymmetrisch um die Achse A gestaltet ist.

Nach dem Einfädeln des Schweißdrahtes in der Ausgleichsvorrichtung 7 verläuft dieser innerhalb des Gehäuses 20a, b im Wesentlichen in der XY-Ebene des in Figur 2 angegebenen Koordinatensystem, die insofern die Bewegungsebene des Schweißdrahtes in der Ausgleichsvorrichtung darstellt, wenn der Schweißdraht vollständig durch die Ausgleichsvorrichtung hindurchgefädelt ist. Der Sensor 60 ist so platziert, dass die Sensor- bzw. Erfassungsbereichsachse A im Wesentlichen radial zum Schweißdraht orientiert ist. Wird der Schweißdraht im Bereich des angegebenen Erfassungskegels D ausgelenkt, beispielsweise durch Erhöhen oder Erniedrigen der Drahtstrecke innerhalb des Freiraums 30 der Ausgleichsvorrichtung, erfolgt diese Auslenkung im Wesentlichen in Y-Richtung. Die hierdurch verursachte Abstandsänderung des Drahtes zum Sensor 60 wird von letzterem erfasst. In Bezug auf den bogenförmigen Verlauf des Drahtes innerhalb der Ausgleichsvorrichtung 7 wird der Draht im Erfassungsbereich des Sensors insofern im Wesentlichen radial ausgelenkt. Der Auslenkbereich des Drahtes in Auslenkrichtung y ist in Figur 2 mit dem Bezugszeichen YA angegeben.

Erkennbar erfolgt die Pufferung bzw. Entnahme von überschüssigem Schweißdraht in der erfindungsgemäßen Ausgleichsvorrichtung 7 hinein, bzw. aus diesem heraus, rein passiv durch die beschriebene Förderung des Drahtes mittels der einen bzw. mehreren Drahtantriebseinheit(en), die innerhalb der Schweißdrahtförderstrecke angeordnet sein können.

Die zumindest an einem der beiden Gehäuseelemente befestigte Kupplungseinrichtung 40, welche im Einlaufabschnitt der Ausgleichsvorrichtung angeordnet ist, weist in der beschriebenen Ausführungsform vier jeweils hohl ausgebildete Einzelbauteile auf. Die Aufnahmebuchse 41 ist dabei an einem der Gehäusehälften befestigt und nimmt einen hohlen Klemmbackenzylinder auf, der durch Verschrauben der Klemmschraube 43 mit der Aufnahmebuchse 41 die sich axial durch die Aufnahmebuchse 41, den Backenzylinder und die Klemmschraube 43 erstreckende Drahtseele 70 des Schweißdrahtes verklemmt. Ferner ist in der beschriebenen Ausführungsform der die Drahtseele umgebende Drahtführungsschlauch 75 an der Aufnahmebuchse 41 befestigt. Hierzu ist eine Übergangsbuchse 44 vorgesehen, die einen Flansch aufweist, auf den der Drahtführungsschlauch 75 aufschiebbar ist. Die Übergangsbuchse 44 erstreckt sich abschnittsweise in die Aufnahmebuchse 41 hinein und ist mittels einer in die Aufnahmebuchse eingeschraubten Klemmschraube 45 verklemmt.

Die im Auslaufabschnitt des Gehäuses angeordnete Kupplungseinrichtung 50 umfasst fünf hohle Bauteile. Dies betrifft zum einen die mit Bezug auf die Kupplungseinrichtung 40 beschriebenen Bauelemente eine Aufnahmebuchse 51, einen Klemmbackenzylinder und eine hohle Klemmschraube 53, mit welchen die Drahtseele 70 des auslaufenden Schweißdrahtes 10 an der Kupplungseinrichtung und damit am Gehäuse befestigt wird. Entsprechend der Gestaltung im Einlaufbereich ist der die Drahtseele umgebende Drahtführungsschlauch 75 an der Aufnahmebuchse 51 mittels einer Übergangsbuchse 54 fixiert, die einen Flansch aufweist, auf den der Drahtführungsschlauch aufschiebbar ist. Die Übergangsbuchse 54 erstreckt sich abschnittsweise in die Aufnahmebuchse 51 hinein und ist mittels einer in die Aufnahmebuchse eingeschraubten Klemmschraube 55 verklemmt. Die Kupplungseinrichtung 50 weist als zusätzliches Bauteil eine trichterförmige Buchse 56 auf, die axial zu den weiteren Bauteilen 51 - 54 ausgerichtet ist und beim Durchfädeln des Schweißdrahtes dazu dient, diesen axial auszurichten, sodass er in die Drahtseele 70 beim Fördern in Richtung zum Brenner in die Drahtseele 70 eingefädelt wird.

Um zum einen das Ein- bzw. Durchfädeln des Schweißdrahtes zu vereinfachen und zum anderen sicherzustellen, dass der Schweißdraht zumindest innerhalb des Erfassungsbereichs D definiert und optimal für die Messung angeordnet ist, sind die den Freiraum 30 festlegenden Begrenzungsflächen speziell gestaltet. Im Einlaufbereich beschränken gekrümmte Flächen 31, 32, welche sich im Wesentlichen senkrecht zur Bewegungsebene XY des Schweißdrahtes erstrecken, den Freiraum 30. Eine hierzu etwa senkrecht angeordnete Fläche 33 verläuft keil- oder rampenförmig, derart, dass unmittelbar vor dem Erfassungsbereich D senkrecht zur Bewegungsebene XY des Schweißdrahtes eine geringe Bewegungsfreiheit für diesen senkrecht zur Bewegungsebene vorliegt. Zusammen mit dem komplementär gestalteten Gehäuseelement stellt das in Figur 2 dargestellte Gehäuseelement im Einlaufbereich insofern einen trichterförmigen Freiraumabschnitt bereit, wobei die Trichterachse gekrümmt ist, und der Freiraum in Bezug auf die Koordinaten der Bewegungsebene zunimmt, während der Freiraum in Bezug auf eine Richtung senkrecht zur Bewegungsebene XY abnimmt mit der damit verbundenen Zwangsführung des Drahtes. In der beschriebenen Ausführungsform weist der Freiraum, ausgehend von dem Draht-Einlaufbereich unmittelbar vor dem Erfassungsbereich D in eine Richtung senkrecht zur Bewegungsrichtung des Drahtes (hier die x-Richtung) eine sprunghafte Vergrößerung auf, um eine möglichst optimale Erfassung des Schweißdrahtes durch den Sensor 60 innerhalb des Erfassungsbereichs D zu ermöglichen. Die besagte Sprungstelle durch die sprunghafte Erhöhung des Freiraums senkrecht zur Bewegungsrichtung ist in Figur 2 als Begrenzungskante 34 angegeben, die im Wesentlichen parallel zur Achse A des Sensors bzw. des Erfassungsbereichs D orientiert ist. Aus dieser Darstellung geht auch hervor, dass die etwa senkrecht zur XY-Ebene verlaufende, äußere Begrenzungsfläche 31 am Ort der Begrenzungskante 34 eine Art Unstetigkeit aufweist, dahingehend, dass sich der Freiraum in Richtung zur Achse A des Sensors vergrößert. Die beschriebenen Gestaltungen der Begrenzungsflächen des Freiraums im Bereich bzw. unmittelbar vor dem Erfassungsbereich D des Sensors haben zur Folge, dass innerhalb des Erfassungsbereichs des Sensors keine die Messung eventuell störende Begrenzungen angeordnet sind.

Um einen erhöhten Abrieb im Bereich bzw. vor der Kante 34 zu vermeiden, weist die erfindungsgemäße Ausgleichsvorrichtung ein in das Gehäuseelement 20a eingesetztes Anlageelement 38 aus einem gehärteten Material auf, das sich über den gesamten Auslenkbereich des Drahtes in Y-Richtung erstreckt.

Um ein automatisiertes Einfädeln des Schweißdrahtes 10 beim Hindurchfädeln des Drahtes durch die Ausgleichsvorrichtung zu ermöglichen, ist der auslaufende Freiraumabschnitt, ausgehend vom Erfassungsbereich D senkrecht zur Bewegungsebene XY des Drahtes wiederum durch gekrümmte Flächen 35, 36 begrenzt, die in Richtung zur zweiten Kupplungseinrichtung aufeinander zulaufen. Da auch der Freiraum in eine Richtung senkrecht zur XY-Richtung zur Kupplungseinrichtung 50 hin abnimmt, verjüngt sich der Freiraum 30 ausgehend von dem Erfassungsbereich D trichterförmig und ausgerichtet zum Aufnahmekegel der Buchse 56, sodass der hindurch geförderte Draht aufgrund dieser Zwangsführung über die trichterförmige Buchse 56 aufgenommen und in die Drahtseele 70 bzw. den Drahtführungsschlauch 75 eingefädelt wird.

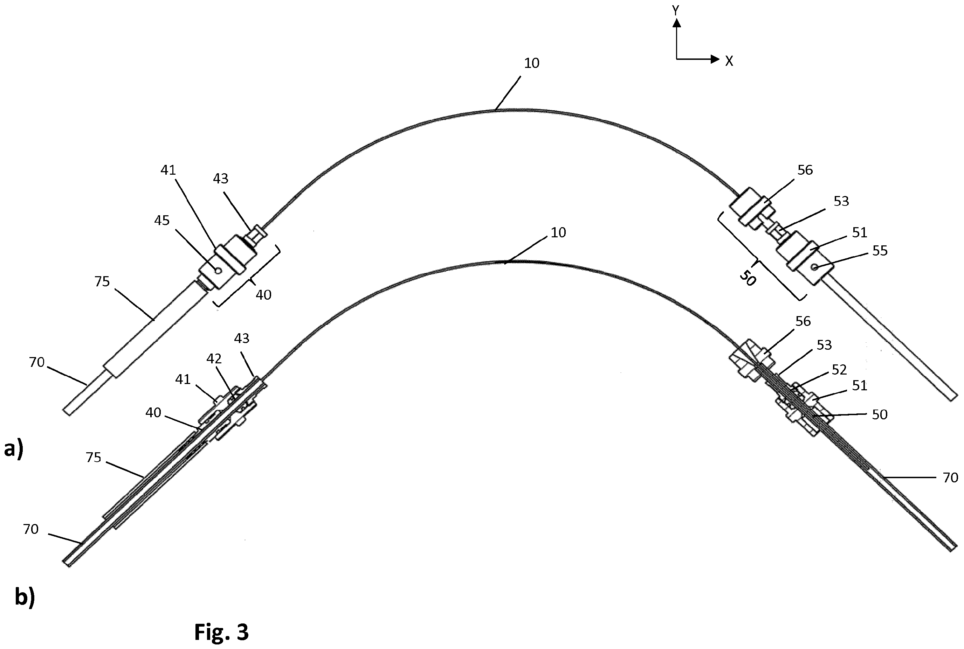

Figuren 3a,b zeigen zur Klarheit der Darstellung die Anordnung der beiden Kupplungseinrichtungen 40, 50 zusammen mit hindurchgefädeltem Schweißdraht 10 und unabhängig vom Gehäusemodul 20a in einer Aufsichtsdarstellung, Figur 3a, sowie in einer diesbezüglichen Schnittdarstellung, wobei die Schnittebene in der xy-Bewegungsebene des Drahtes liegt, siehe Figur 3b. In dieser Darstellung sind die Klemmbackenzylinder 42, 52 erkennbar, welche über die Schraubverbindung der Klemmschraube 43, 53 mit der Aufnahmebuchse 41, 51 die Drahtseele 70 in der jeweiligen Kupplungseinrichtung fixieren.

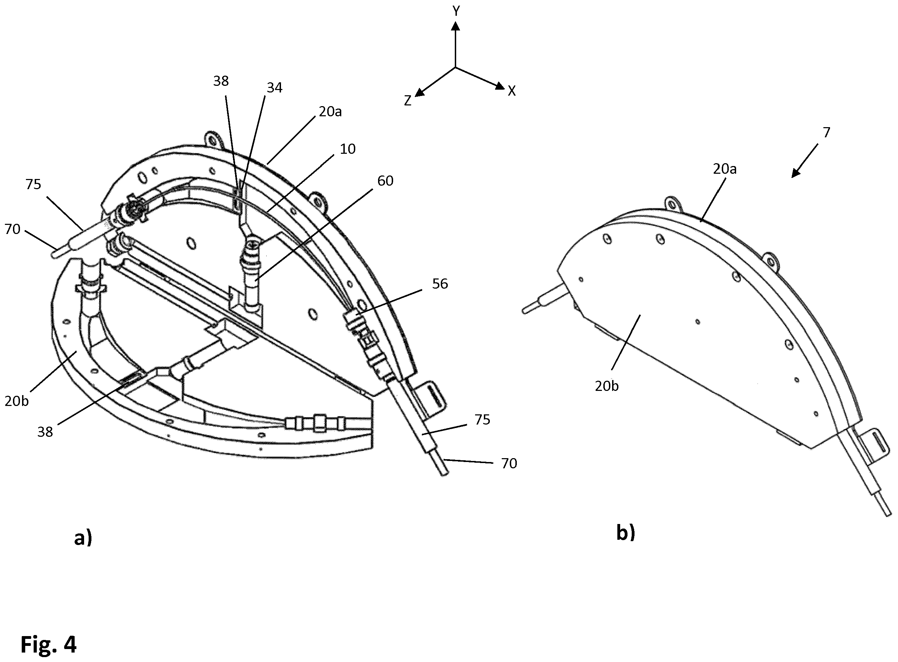

Die Figuren 4a, b zeigen die beschriebene Ausführungsform einer Ausgleichsvorrichtung 7 in einer Offenstellung der beiden Gehäuseelemente 20a, b, siehe Figur 4a, bzw. im geschlossenen Zustand, siehe Figur 4b. Die sprunghafte Vergrößerung des Freiraums sowohl in Y-Richtung als auch in Z-Richtung an der Begrenzungskante 34 unmittelbar vor dem Erfassungsbereich D ist insbesondere aus Figur 4a ersichtlich.

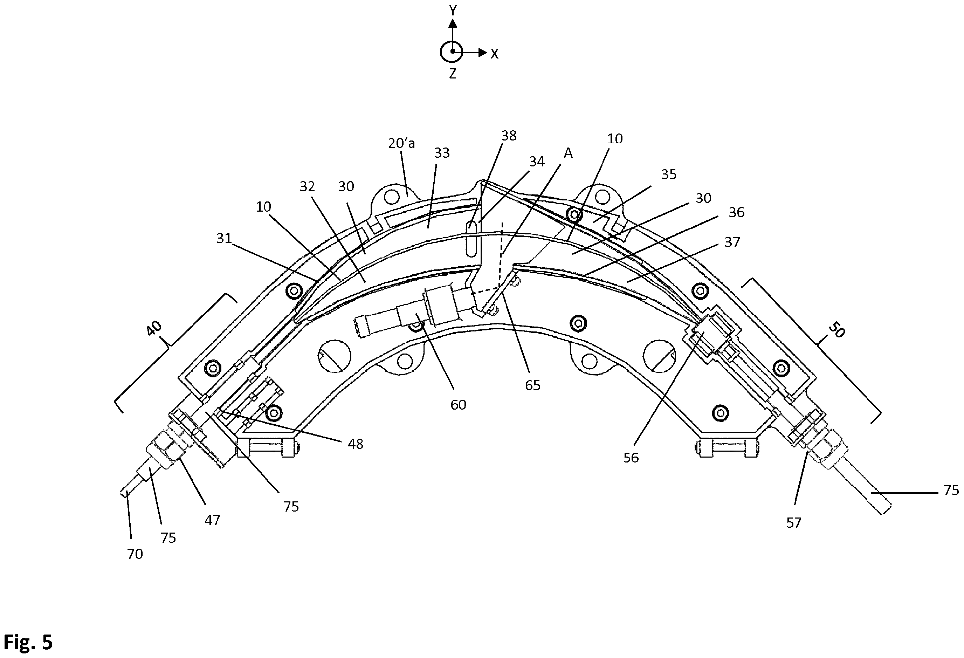

Figur 5 zeigt eine zweite Ausführungsform einer erfindungsgemäß gestalteten Ausgleichsvorrichtung, bei welcher das Gehäuse wiederum plattenförmige Gehäusehälften ausweist, als frontale Ansicht auf eine dieser Gehäuseelemente 20a', wobei erste und zweite Kupplungseinrichtungen sowie der Sensor 60 zur Klarheit der Darstellung eingelegt bzw. dargestellt sind. In der Figur 5 auf der linken Seite weist das Gehäuseelement 20a' einen Einlaufabschnitt auf, in welchem eine erste Kupplungseinrichtung 40 angeordnet ist, hier in Form einer Klemmverschraubung 47 zur Verklemmung des Drahtführungsschlauchs 75 mit dem Gehäuse der Schweißdrahtausgleichsvorrichtung und einer im Innern des Gehäuses angeordneten Clipaufnahme 48 zur Aufnahme eines in das Gehäuse sich erstreckenden Abschnittes des Drahtführungsschlauchs. In Drahtzuführungsrichtung hinter der Clipaufnahme 48 verläuft der Draht 10 nicht ummantelt innerhalb des Freiraums 30 der Vorrichtung. Zur Achse der ersten Kupplungseinrichtung 40 etwa um 90° gekippt ist, wie in der ersten Ausführungsform, in der Figur 5 auf der rechten Seite eine zweite Kupplungseinrichtung 50 in einem Auslaufabschnitt des Gehäuses angeordnet, über den der Schweißdraht die Ausgleichsvorrichtung in Richtung zum Schweißbrenner verlässt. In entsprechender Weise zur ersten Ausführungsform dient die Kupplungseinrichtung 50 zum Führen des aus der Ausgleichsvorrichtung auslaufenden Drahtes und zum Fixieren des Drahtführungsschlauches 75 an der Vorrichtung über der Klemmverschraubung 57, die identisch zu der Klemmverschraubung 47 ausgebildet ist.

Wie in der ersten Ausführungsform ist zwischen den beiden Kupplungseinrichtungen 40, 50 ein Freiraum 30 vorgesehen, innerhalb dessen der Schweißdraht 10 nicht ummantelt, d.h. freiliegende angeordnet ist. Wiederum wird der Freiraum 30 durch entsprechende Begrenzungsflächen gebildet, von welchen das Gehäuseelement 20a' insbesondere die in der Figur bezeichneten Flächen 31, 32, 35, 36 bereitstellt. Wiederum verläuft der im Freiraum 30 des Gehäuses der Ausgleichsvorrichtung angeordnete Schweißdraht 10 bogenförmig zwischen den beiden Kupplungseinrichtungen 40, 50, wobei der Abstandssensor 60 in dieser Ausführungsform, wiederum als Ultraschallsensor ausgebildet, innerhalb der Vorrichtung so angeordnet ist, dass dessen Längsachse etwa parallel zum Draht 10 verläuft. Zur Umlenkung der Sensor- bzw. Erfassungsachse A etwa senkrecht auf den Schweißdraht 10 ist ein Spiegelelement 65 vorgesehen, das in der beschriebenen Ausführungsform zur Achse A in einem Winkel von etwa 55° in Bezug auf eine Normale der Spiegelfläche angeordnet ist.

Nach dem Einfädeln des Schweißdrahtes in der Ausgleichsvorrichtung im Einlaufbereich verläuft dieser wie in der erstbeschriebenen Ausführungsform innerhalb des Gehäuses im Wesentlichen in der XY-Ebene des in Figur 5 angegebenen Koordinatensystems, welche die Bewegungsebene des Schweißdrahtes in der Ausgleichsvorrichtung darstellt, wenn der Schweißdraht vollständig durch die Ausgleichsvorrichtung hindurchgefädelt ist. Der Sensor 60, zusammen mit dem Spiegelelement 65 ist so platziert, dass die Sensor- bzw. Erfassungsbereichsachse A im Wesentlichen radial bzw. senkrecht zum Schweißdraht orientiert ist. Die Auslenkung des Schweißdrahtes erfolgt wie in der vorhergehenden Ausführungsform im Wesentlichen in Y-Richtung, wobei die hierdurch verursachte Abstandsänderung des Drahtes zum Sensor von Letzterem erfasst wird.

Auch in der in Figur 5 dargestellten Ausführungsform beschränken im Einlaufabschnitt gekrümmte Flächen 31,32 den Freiraum 30. Eine zu diesen Flächen etwa senkrecht angeordnete Begrenzungsfläche 33 verläuft keil- oder trichterförmig, so dass unmittelbar vor dem Erfassungsbereich senkrecht zur Bewegungsebene XY des Schweißdrahtes eine geringe Bewegungsfreiheit des Drahtes senkrecht zur Bewegungsebene vorliegt. Zusammen mit dem in der Figur nicht dargestellten Gegenelement des Gehäuseelements 20a' wird im Einlaufbereich der Vorrichtung insofern ein trichterförmigen Freiraumabschnitt bereitgestellt, wobei die Trichterachse in der Zeichnungsebene der Figur 5 liegt und der Freiraum in Bezug auf die Koordinaten der Bewegungsebene zunehmend ausgebildet ist, während der Freiraum in Bezug auf die z-Richtung abnimmt mit der damit verbundenen Zwangsführung des Drahtes innerhalb eines Bereichs in z-Richtung, welcher in seinem Maß innerhalb der Größenordnung der Drahtdicke liegt.

In gleicher Weise wie in der ersten beschriebenen Ausführungsform, weist auch in dieser Ausführungsform der Freiraum, ausgehend von dem Bereich unmittelbar vor dem Erfassungsbereich des Sensors in einer Richtung senkrecht zur Bewegungsrichtung, d.h. in z-Richtung des Drahtes eine sprunghafte Vergrößerung auf, um eine möglichst optimale Erfassung des Schweißdrahtes durch den Sensor 60 bereitzustellen. Diese Sprungstelle, gebildet durch eine sprunghafte Erhöhung des Freiraumes senkrecht zu Bewegungsrichtung, ist in Figur 5 als Begrenzungskante 34 angegeben, die hier im Wesentlichen parallel zur Achse A des Sensors bzw. des Erfassungsbereich orientiert ist. Im Bereich dieser Begrenzungskante 34 weist die rampenförmige Begrenzungsfläche 33 ein auf- oder eingesetztes Element 38 auf, welches aus einem gehärteten Material hergestellt ist um etwaige Abriebeffekte durch den Draht an den, den Freiraum festlegenden Begrenzungsflächen der Vorrichtung zu vermeiden. In gleicher Weise weist das nicht gezeigte Gegenelement des in Figur 5 dargestellten Gehäuseelementes 20'a ein dem Anlageelement 38 zugeordnetes Anlageelement aus einem gehärteten Material auf, sodass der Schweißdraht zwischen den beiden Anlageelementen geführt ist.

Wie aus Figur 5 hervorgeht, weist der Übergang der beiden Begrenzungsflächen 31,35 unmittelbar vor dem Erfassungsbereich eine Unstetigkeit auf, da sich der Freiraum an dieser Stelle in y-Richtung bzw. parallel zur Achse A vergrößert um sicherzustellen, dass innerhalb des Erfassungsbereich des Sensors keine die Messung eventuell störende Begrenzungen angeordnet sind.

Um ein automatisiertes, d.h. motorisches Hindurchfädeln des Schweißdrahtes durch die Ausgleichsvorrichtung zu ermöglichen, ist der auslaufende Freiraumabschnitt, ausgehend vom Erfassungsbereich in der Bewegungsebene XY des Drahtes wiederum durch gekrümmte Flächen 35,36 begrenzt, die in Richtung zur zweiten Kupplungseinrichtung 50 aufeinander zu verlaufen. Da in der Ausführungsform der Figur 5 der Freiraum 30 auch in der Richtung senkrecht zur Bewegungsebene des Schweißdrahtes in Richtung zur Kopplungseinrichtung 50 hin abnimmt, verjüngt sich der Freiraum 30 ausgehend von dem Erfassungsbereich trichterförmig und ausgerichtet in einen Aufnahmekegel einer bezüglich ihres Durchgangs trichterförmigen Buchse 56, so dass der hindurch geförderte Schweißdraht aufgrund dieser Zwangsführung wie bei der vorstehend beschriebenen ersten Ausführungsform über die Buchse 56 aufgenommen und in die Drahtseele 70 bzw. den Drahtführungsschlauch 75 eingefädelt wird. Der Schweißdraht 10 verlässt sodann die Vorrichtung über die hohle Verschraubung 57, mit welcher der Drahtführungsschlauch 75 am Gehäuse der Vorrichtung befestigt ist.

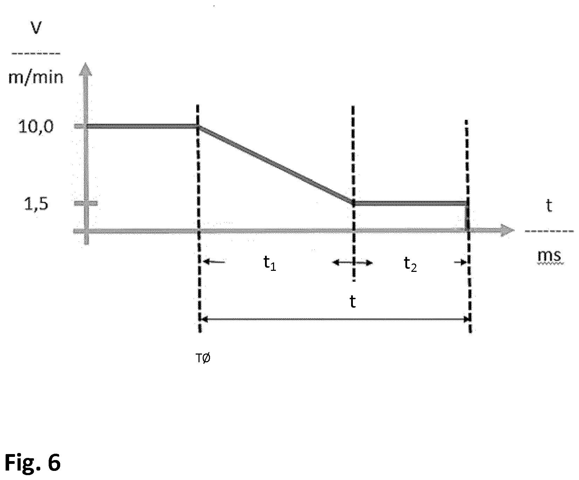

Die Funktionalität der erfindungsgemäß gestalteten Ausgleichsvorrichtung kann insbesondere genutzt werden, um das gesamte Einfädeln des Drahtes bis zum Austritt aus der Stromdüse des Schweißbrenners automatisiert und gesteuert durchzuführen. Hierzu ist allein direkte oder indirekte Information über die Drahtlänge vom Erfassungsbereich D der Ausgleichsvorrichtung bis zur Austrittsöffnung an der Stromdüse des Brenners notwendig. Mit dieser Information kann die jeweilige Steuerung eines Schweißsystems bzw. einer Schweißanlage den Draht, ausgehend von der Drahtvorratseinrichtung bis in die erfindungsgemäß gestaltete Ausgleichsvorrichtung für einen Schweißdraht fördern, wobei diese Förderung durch den Sensor 60 beim Eintauchen des geförderten Schweißdrahtes bzw. dessen Drahtende in den Erkennungsbereich D des Sensors zum Zeitpunkt T0 erfasst wird. In einer zweckmäßigen Ablaufsteuerung kann dann die Drahtfördergeschwindigkeit z.B. mit vorgegebener Absenkrate über einen vorgegebenen Zeitraum t1 abgesenkt und nachfolgend mit verminderter Geschwindigkeit der Draht bis zum Austritt aus der Stromdüse gefördert werden. Die zu fördernde Drahtlänge nach der Erfassung des Schweißdrahtes bestimmt dann die Zeitdauer t2, innerhalb dessen der Draht mit verminderter Geschwindigkeit weiter gefördert wird. Ein diesbezüglicher Verlauf der Fördergeschwindigkeit ist in Figur 6 angegeben.

### Bezugszeichenliste

- 1: Roboterschweißanlage
- 2: Schweißgerät
- 3: Roboter
- 4a: Drahtrolle
- 4b: Drahtfass
- 5: Drahtführungsschlauch
- 6: Hauptantrieb für den Schweißdraht
- 7: Ausgleichsvorrichtung
- 8: Brenner
- 9: Schlauchpaket
- 10: Schweißdraht
- 11: Hilfsantrieb für den Schweißdraht
- 12: Hilfsantrieb für den Schweißdraht
- 13: Zweite Ausgleichsvorrichtung
- 15: Verbindungsschlauchpaket
- 16: Werkstückleitung
- 17: Werkstück
- 18: Schaltschrank
- 20a, b: Gehäuseelement
- 20a':
- 30: Freiraum
- 31,32: Gekrümmte Begrenzungsfläche
- 33: Rampenförmige Begrenzungsfläche
- 34: Begrenzungskante
- 35, 36: Gekrümmte Begrenzungsfläche
- 37: Rampenförmige Begrenzungsfläche
- 38: Anlageelement
- 40: Kupplungseinrichtung
- 41: Aufnahmebuchse
- 42: Klemmbackenzylinder
- 43: Klemmschraube
- 44: Übergangsbuchse
- 45: Klemmschraube
- 47: Klemmverschraubung
- 48: Clipaufnahme für Drahtführungsschlauch
- 50: Kupplungseinrichtung
- 51: Aufnahmebuchse
- 52: Klemmbackenzylinder
- 53: Klemmschraube
- 54: Übergangsbuchse
- 55: Klemmschraube
- 56: Trichterförmige Buchse
- 57: Klemmverschraubung
- 60: Sensor
- 65: Spiegelelement
- 70: Drahtseele
- 75: Drahtführungsschlauch
- A: Sensorachse
- D: Erfassungskegel
- YA: Auslenkstrecke
- T0: Zeitpunkt der Drahterfassung
- t1: Zeitdauer der der Drahtförderung mit Geschwindigkeitsreduzierung
- t2: Zeitdauer der Drahtförderung mit verminderter Geschwindigkeit

## Patentansprüche

1. Schweißdrahtausgleichsvorrichtung (7) umfassend
- ein Gehäuse (20a, b) mit einem Einlauf- und einem Auslaufabschnitt sowie einem Freiraum (30) zur Aufnahme eines Schweißdrahtes (10);
- eine erste, im Einlaufabschnitt des Gehäuses (20a, b) angeordnete Kupplungseinrichtung (40), die eingerichtet ist zur Befestigung eines Drahtführungsschlauchs (75) für den einlaufenden Schweißdraht;
- eine zweite, im Auslaufabschnitt des Gehäuses (20a, b) angeordnete Kupplungseinrichtung (50), die eingerichtet ist zur Befestigung eines Drahtführungsschlauchs (75) für den auslaufenden Schweißdraht; sowie
- einen Sensor (60), der eingerichtet ist zur Erfassung einer Auslenkung der in der Ausgleichsvorrichtung gepufferten, im Gehäuse (20a, b) zumindest abschnittsweise bogenförmig verlaufenden Schweißdrahtes (10),
wobei der Schweißdraht (10) über seine Erstreckung im Freiraum (30) des Gehäuses (20a, b) nicht ummantelt verläuft, **dadurch gekennzeichnet, dass** der Freiraum für den nicht ummantelten Schweißdraht eine Zwangsführung bereitstellt zum Durchfädeln des Schweißdrahtes aus der ersten Kupplungseinrichtung (40) heraus in der zweite Kupplungseinrichtung (50) und der Sensor (60) ferner eingerichtet ist, das Vorhandensein sowie das Fehlen von Schweißdraht im Freiraum (30) des Gehäuses (20a, b) zu erfassen.

2. Schweißdrahtausgleichsvorrichtung (7) nach Anspruch 1, **dadurch gekennzeichnet, dass** der Freiraum (30) zur Festlegung einer Auslenkung des Schweißdrahtes (10) zumindest eine Begrenzung aufweist, die in Auslenkrichtung des Drahtes eine Sprungstelle bzw. Unstetigkeit aufweist.

3. Schweißdrahtausgleichsvorrichtung (7) nach Anspruch 1 oder 2, **dadurch gekennzeichnet, dass** die vom Freiraum bereitgestellte Zwangsführung so ausgebildet ist, dass bei einem durch die Vorrichtung hindurch gefädeltem Schweißdraht (10) dieser im Gehäuse (20a, b) innerhalb des Freiraumes im Wesentlichen in einer Ebene verläuft.

4. Schweißdrahtausgleichsvorrichtung (7) nach Anspruch 3, **dadurch gekennzeichnet, dass** sich der Freiraum (30) in Drahtbewegungsrichtung vor dem Erfassungsbereich des Sensors (60) in Bezug auf eine Richtung sprunghaft vergrößert, die in der Bewegungsebene des Schweißdrahtes (10) und parallel zur Richtung der Auslenkung liegt.

5. Schweißdrahtausgleichsvorrichtung (7) nach Anspruch 1 bis 4, **dadurch gekennzeichnet, dass** sich der Freiraum (30), ausgehend von der ersten Kupplungseinrichtung (40) und senkrecht zur Bewegungsebene des Schweißdrahtes, in Richtung zum Erfassungsbereich verringert.

6. Schweißdrahtausgleichsvorrichtung (7) nach Anspruch 5, **dadurch gekennzeichnet, dass** sich der Freiraum (30) in Drahtbewegungsrichtung nach der trichterartigen Verjüngung und vor dem bzw. am Erfassungsbereich des Sensors (60) in eine Richtung senkrecht zur Bewegungsebene des Schweißdrahtes (10) sprunghaft vergrößert.

7. Schweißdrahtausgleichsvorrichtung (7) nach einem der Ansprüche 1 bis 6, **dadurch gekennzeichnet, dass** der Sensor (60) als berührungsloser Sensor ausgebildet ist.

8. Schweißdrahtausgleichsvorrichtung (7) nach einem der Ansprüche 1 bis 7, **dadurch gekennzeichnet, dass** der Sensor (60) bei nicht durch die Vorrichtung hindurch gefädeltem Schweißdraht (10) den Abstand des Sensors zu einem Messpunkt bzw. einer Messfläche im Innern des Gehäuses (20a, b) erfasst, wobei der Messpunkt bzw. die Messfläche bei eingefädeltem Schweißdraht (10) durch diesen zumindest abschnittsweise verdeckt ist.

9. Schweißdrahtausgleichsvorrichtung (7) nach einem der Ansprüche 1 bis 8, **dadurch gekennzeichnet, dass** sich der Freiraum (30) ausgehend vom Erfassungsbereich des Sensors (40) in Richtung zur zweiten Kupplungseinrichtung (50) verjüngt.

10. Schweißdrahtausgleichsvorrichtung (7) nach einem der Ansprüche 1 bis 9, **dadur chgekennzeichnet**, **dass** die zweite Kupplungseinrichtung (50) eingangsseitig eine trichterförmige Aufnahme (56) zur Aufnahme des Schweißdrahtes (10) aufweist, deren Öffnungskegel mit einer trichterförmigen Verengung des Freiraums (30) korrespondiert.

11. Schweißdrahtausgleichsvorrichtung (7) nach einem der Ansprüche 1 bis 10, **dadurch gekennzeichnet, dass** das Gehäuse zwei plattenförmige Gehäusehälften (20a, b) umfasst, die zueinander ausrichtbare Ausnehmungen zur Gestaltung eines Freiraumes für den Schweißdraht (10) zu dessen Zwangsführung zwischen den beiden Kupplungseinrichtungen (40, 50) aufweist.

12. Schweißdrahtausgleichsvorrichtung (7) nach einem der Ansprüche 1 bis 11, **gekennzeichnet durch** zumindest ein sich in Auslenkungsrichtung erstreckendes Anlageelement (38), das vor dem Erfassungsbereich des Sensors (60) angeordnet ist zur Bereitstellung einer Anlagefläche für den Schweißdraht (10), die parallel zur Schweißdrahtbewegungsebene angeordnet ist.

13. Schweißdrahtausgleichsvorrichtung nach einem der Ansprüche 1 bis 12, **gekennzeichnet durch** eine Spiegeleinrichtung zur Umlenkung von, vom Sensor ausgesendeten Sensorwellen in Richtung zum Schweißdraht und zur Umlenkung von, vom Schweißdraht reflektierten oder gestreuten Sensorwellen in Richtung auf eine Sensorfläche des Sensors.

14. Verfahren zum Durchfädeln eines Schweißdrahtes (10) in einer Schweißdrahtförderstrecke eines Schweißsystems, bei welchem der Schweißdraht (10) von einer Drahtvorratseinrichtung wie einer Drahtrolle (4a) mittels zumindest eines Drahtantriebs (11, 12, 6) abgerollt und durch eine Schweißdrahtausgleichsvorrichtung (7) hindurch bis zum Austritt an einer Düse eines Schweißbrenners (8) des Schweißsystems, insbesondere einer Stromdüse, gefördert wird, **gekennzeichnet durch** die Schritte:
- Abspeichern von einer Länge der Drahtförderstrecke zwischen der Schweißdrahtausgleichsvorrichtung (7) und einer Austrittsdüse eines Schweißbrenners (8) zugeordneten Information;
- Bewegen des Schweißdrahtes (10) in die Ausgleichsvorrichtung (7) hinein **durch** entsprechendes Ansteuern des Drahtantriebes (11, 12, 6), bis das Vorhandensein des Schweißdrahtes in der Ausgleichsvorrichtung mittels eines Sensors (60) erkannt wird;
- Weiterbewegen des Schweißdrahtes (10) **durch** entsprechendes Ansteuern des Drahtantriebes (11, 12, 6) über eine Wegstrecke, die der abgespeicherten Informationen zur Länge der Drahtförderstrecke zwischen der Ausgleichsvorrichtung und der Austrittsdüse des Schweißbrenners entspricht zum Fördern des Schweißdrahtes aus der Ausgleichsvorrichtung heraus bis zum Austritt an der Stromdüse des Schweißbrenners (8).

15. Verfahren nach Anspruch 14, **dadurch gekennzeichnet, dass** die Fördergeschwindigkeit des Schweißdrahtes (10) nach dem Erkennen des Schweißdrahtes in der Ausgleichsvorrichtung (7) erniedrigt wird.

16. Verfahren nach Anspruch 14 oder 15, **dadurch gekennzeichnet, dass** die Information betreffend die Länge der Drahtförderstrecke zwischen der Ausgleichsvorrichtung (7) und der Austrittsdüse des Schweißbrenners (8) in einer Steuereinrichtung gespeichert wird, welche den Drahtantrieb (11, 12, 6) zum Fördern des Schweißdrahtes (10) ansteuert.

## Claims

1. Compensation device for a welding wire (7) comprising:
- a housing (20a, b) with an inlet and an outlet section as well as a free space (30) for receiving a welding wire (10);
- a first coupling device (40) placed in the inlet section of the housing (20a, b) that is arranged for fixing a wire guide hose (75) for the entering welding wire;
- a second coupling device (50) placed in the outlet section of the housing (20a, b) that is arranged for fixing a wire guide hose (75) for the outgoing welding wire as well as
- a sensor (60) that is arranged for detecting a deflection of the welding wire (10) stored in the compensation device and arcuately extending at least in sections in the housing (20a, b), wherein the welding wire (10) extends non-coated over its extension in the free space (30) of the housing (20a, b),
**characterized in that** the free space for the non-coated welding wire makes available a forced guidance for threading the welding wire out of the first coupling device (40 in the second coupling device (50) and the sensor (60) is furthermore adapted to detect the presence as well as the absence of the welding wire in the free space (30) of the housing (20a, b).

2. Compensation device for a welding wire (7) according to claim 1, **characterized in that** the free space (30) for fixing a deflection of the welding wire (10) has at least a limitation that has a discontinuity or an unsteadiness in the deflection direction.

3. Compensation device for a welding wire (7) according to claim 1, **characterized in that** the forced guidance made available by the free space is configured in such a way that, when the welding wire (10) is not threaded through the device it extends in the housing (20a, b) substantially in a plane inside the free space.

4. Compensation device for a welding wire (7) according to claim 3, **characterized in that** the free space (30) jumps up in the welding wire direction before the detection region of the sensor (60) with respect to a direction that is situated in the movement plane of the welding wire (10) and parallel to the direction of the deflection.

5. Compensation device for a welding wire (7) according to claim 1, **characterized in that** the free space (30) reduces in direction of the detection region starting from the first coupling device (40) and perpendicularly to the movement plane of the welding wire.

6. Compensation device for a welding wire (7) according to claim 5, **characterized in that** the free space (30)jumps up in the wire movement direction after the funnel-shaped tapering and before or at the detection region of the sensor (60) into a direction perpendicularly to the movement plane of the welding wire (10).

7. Compensation device for a welding wire (7) according to one of the claims 1 to 6, **characterized in that** the sensor (60) is configured as a non-contact sensor.

8. Compensation device for a welding wire (7) according to one of the claims 1 to 7, **characterized in that**, when the welding wire (10) is not threaded through the device, the sensor (60) detects the distance of the sensor from a measurement point or a measurement surface inside the housing (20a, b), wherein the measurement point or the measurement surface is concealed at least in sections by the welding wire (10) when threaded.

9. Compensation device for a welding wire (7) according to one of the claims 1 to 8, **characterized in that** the free space (30) reduces in direction of the second coupling device (50) starting from the detection region of the sensor (40).

10. Compensation device for a welding wire (7) according to one of the claims 1 to 9, **characterized in that** the second coupling device (50) has on the inlet side a funnel-shaped receptacle (56) for receiving the welding wire (10), the opening cone of which corresponds to a funnel-shaped tapering of the free space (30).

11. Compensation device for a welding wire (7) according to one of the claims 1 to 10, **characterized in that** the housing comprises two plate-shaped housing halves (20a, b) that have recesses that can be aligned to each other for constituting a free space for the welding wire (10) for the forced guidance thereof between the two coupling devices (40, 50).

12. Compensation device for a welding wire (7) according to one of the claims 1 to 11, **characterized by** at least one bearing element (38) extending in the deflection direction that is placed before the detection region of the sensor (60) for making available a bearing surface for the welding wire (10) that is placed parallel to the welding wire movement plane.

13. Compensation device for a welding wire (7) according to one of the claims 1 to 12, **characterized by** a mirror device for deflecting sensor waves emitted by the sensor in direction of the welding wire and for deflecting sensor waves reflected or scattered by the welding wire in direction of a sensor surface of the sensor.

14. Method for threading a welding wire (10) in a compensation device for a welding wire in a welding wire conveying path of a welding system for which the welding wire (10) is unrolled from a wire stock device such as a wire roll (4a) by means of a wire drive (!1, 12, 6) and conveyed through a compensation device for welding wire to the outlet at a nozzle of a welding torch (8) of the welding system, in particular of a current nozzle, **characterized by** the steps:
- saving of information associated to a length of the wire conveying path between the welding wire compensation device (7) and an outlet nozzle of a welding torch (9);
- moving of the welding wire (10) into the compensation device (7) by a corresponding control of the wire drive (!1, 12, 6) until the presence of the welding wire in the compensation device is detected by means of a sensor (60);
- further moving of the welding wire (10) by a corresponding control of the wire drive (!1, 12, 6) over a distance that corresponds to the saved information about the length of the wire conveying path between the compensation device and the outlet nozzle of the welding torch for conveying the welding wire out of the compensation device to the outlet at the current nozzle of the welding torch (8).

15. Method according to claim 14, **characterized in that** the conveying speed of the welding wire (10) reduces after the welding wire has been detected in the compensation device (7).

16. Method according to claim 14 or 15, **characterized in that** the information about the length of the conveying path between the compensation device (7) and the outlet nozzle of the welding torch (8) is stored in a control device that controls the wire dire (11, 12, 6) for conveying the welding wire (10).

## Revendications

1. Dispositif compensateur pour un fil de soudage (7) comprenant :
- un bâti (20a, b) avec une partie entrée et une partie sortie ainsi qu'un espace libre (30) pour recevoir un fil de soudage (10) ;
- un premier dispositif de couplage (40) placé dans la partie entrée du bâti (20a, b) qui est aménagé pour la fixation d'un tuyau de guidage de fil (75) pour le fil de soudage entrant ;
- un second dispositif de couplage (50) placé dans la partie sortie du bâti (20a, b) qui est aménagé pour la fixation d'un tuyau de guidage de fil (75) pour le fil de soudage sortant ainsi
- qu'un capteur (60) qui est aménagé pour détecter une déflexion du fil de soudage (10), stocké dans le dispositif compensateur, qui s'étend au moins partiellement en forme arquée dans le bâti (20a, b), cependant que le fil de soudage (10) s'étend sans être gainé sur son extension dans l'espace libre (30) du bâti (20a, b),
**caractérisé en ce que** l'espace libre pour le fil de soudage non gainé met à disposition un guidage forcé pour enfiler le fil de soudage sortant du premier dispositif de couplage (50) dans le second dispositif de couplage (50) et le capteur (60) est de plus aménagé pour détecter la présence ainsi que le manque de fil de soudage dans l'espace libre (30) du bâti (20a, b).

2. Dispositif compensateur pour un fil de soudage (7) selon la revendication 1, **caractérisé en ce que** l'espace libre (30) présente, pour fixer une déflexion du fil de soudage (10), au moins une limitation qui présente une discontinuité ou une instabilité dans le sens de la déflexion du fil.

3. Dispositif compensateur pour un fil de soudage (7) selon la revendication 1, **caractérisé en ce que** le guidage forcé mis à disposition par l'espace libre est configuré de telle manière que, pour un fil de soudage (10) enfilé à travers le dispositif, le fil de soudage s'étend dans le bâti (20a, b) à l'intérieur de l'espace libre substantiellement dans un plan.

4. Dispositif compensateur pour un fil de soudage (7) selon la revendication 3, **caractérisé en ce que** l'espace libre (30) augmente brusquement dans le sens du déplacement du fil devant la zone de détection du capteur (60) par rapport à une direction qui est située dans le plan de déplacement du fil de soudage (10) et parallèlement à la direction de la déflexion.

5. Dispositif compensateur pour un fil de soudage (7) selon les revendications 1 à 4, **caractérisé en ce que** l'espace libre (30) diminue en direction de la zone de détection en partant du premier dispositif de couplage (40) et perpendiculairement au plan de déplacement du fil de soudage.

6. Dispositif compensateur pour un fil de soudage (7) selon la revendication 3, **caractérisé en ce que** l'espace libre (30) augmente brusquement dans le sens du déplacement du fil après le rétrécissement de type entonnoir et avant ou à l'endroit de détection du capteur (60) dans une direction perpendiculairement au plan de déplacement du fil de soudage (10).

7. Dispositif compensateur pour un fil de soudage (7) selon l'une des revendications 1 à 6, **caractérisé en ce que** le capteur (60) est configuré comme un capteur sans contact.

8. Dispositif compensateur pour un fil de soudage (7) selon l'une des revendications 1 à 7, **caractérisé en ce que** le capteur (60), lorsque le fil de soudage (10) n'est pas enfilé à travers le dispositif, détecte la distance du capteur par rapport à un point de mesure ou à une surface de mesure dans l'intérieur du bâti (20a, b), cependant que le point de mesure ou la surface de mesure, lorsque le fil de soudage (10) est enfilé, est au moins partiellement recouverte par celui-ci.

9. Dispositif compensateur pour un fil de soudage (7) selon l'une des revendications 1 à 8, **caractérisé en ce que** l'espace libre (30) se rétrécit en direction du second dispositif de couplage (50) en partant de la zone de détection du capteur (40).

10. Dispositif compensateur pour un fil de soudage (7) selon l'une des revendications 1 à 9, **caractérisé en ce que** le second dispositif de couplage (50) présente côté entrée un logement en forme d'entonnoir (56) pour recevoir le fil de soudage (10), logement dont le cône d'ouverture correspond à un rétrécissement en forme d'entonnoir de l'espace libre (30).

11. Dispositif compensateur pour un fil de soudage (7) selon l'une des revendications 1 à 10, **caractérisé en ce que** le bâti comprend deux moitiés de bâti en forme de plaque qui présente des évidements qui peuvent être alignés l'un sur l'autre pour configurer un espace libre pour le fil de soudage (10) pour le guidage forcé de celui-ci entre les deux dispositifs de couplage (40, 50).

12. Dispositif compensateur pour un fil de soudage (7) selon l'une des revendications 1 à 11, **caractérisé par** au moins un élément d'appui (38) qui s'étend dans le sens de la déflexion qui est placé devant la zone de détection du capteur (60) pour mettre à disposition une surface d'appui pour le fil de soudage (10) qui est placée parallèlement au plan de déplacement du fil de soudage.

13. Dispositif compensateur pour un fil de soudage (7) selon l'une des revendications 1 à 12, **caractérisé par** un dispositif de miroir pour dévier des ondes de capteur émises par le capteur en direction du fil de soudage et pour dévier des ondes de capteur réfléchies ou dispersées par le fil de soudage en direction d'une surface de capteur du capteur.

14. Procédé pour enfiler un fil de soudage (10) dans une voie d'acheminement du fil de soudage d'un système de soudage pour lequel le fil de soudage (10) est déroulé d'un dispositif de stockage de fil comme un rouleau de fil (4a) au moyen d'au moins un entraînement de fil (11, 12, 6) et est acheminé en traversant un dispositif compensateur pour fil de soudage (7) jusqu'à la sortie à une buse d'une torche de soudage (8) du système de soudage, en particulier à une buse de courant, **caractérisé par** les étapes :
- mémorisation d'une longueur du trajet d'acheminement du fil entre le dispositif compensateur pour fil de soudage (7) et d'une information associée à une buse de sortie d'une torche de soudage (8) ;
- déplacement du fil de soudage (10) pour entrer dans le dispositif compensateur (7) par une commande correspondante de l'entraînement de fil (11, 12, 6) jusqu'à ce que la présence du fil de soudage dans le dispositif compensateur soit reconnue à l'aide d'un capteur (60) ;
- poursuite du déplacement du fil de soudage (10) par une commande correspondante de l'entraînement de fil (11, 12, 6) par un trajet qui correspond aux informations mémorisées sur la longueur du trajet d'acheminement du fil entre le dispositif compensateur et la buse de sortie de la torche de soudage pour acheminer le fil de soudage hors du dispositif compensateur jusqu'à la sortie à la buse de courant de la torche de soudage (8).

15. Procédé selon la revendication 14, **caractérisé en ce que** la vitesse d'acheminement du fil de soudage (10) est diminuée après que le fil de soudage ait été reconnu dans le dispositif compensateur (7).

16. Procédé selon la revendication 14 ou 15, **caractérisé en ce que** l'information qui concerne la longueur du trajet d'acheminement entre le dispositif compensateur (7) et la buse de sortie de la torche de soudage (8) est mémorisée dans un dispositif de commande qui commande l'entraînement du fil (11, 12, 6) pour acheminer le fil de soudage (10).
